# EUROPÄISCHE PATENTSCHRIFT

(11) **EP 1 575 790 B1**
(45) Veröffentlichungstag und Bekanntmachung des Hinweises auf die Patenterteilung: **08.08.2007**
(21) Anmeldenummer: 03789198.3
(22) Anmeldetag: 10.12.2003
(51) Int. Cl.: B60C 23/06

(54) **VERFAHREN ZUR INDIREKTEN DRUCKVERLUSTERKENNUNG AN EINEM KRAFTFAHRZEUGRAD**
METHOD FOR INDIRECTLY IDENTIFYING THE LOSS OF PRESSURE ON A MOTOR VEHICLE WHEEL
PROCEDE D'IDENTIFICATION INDIRECTE DE PERTE DE PRESSION SUR UNE ROUE D'AUTOMOBILE

(30) Priorität: 17.12.2002 DE 10259201
(43) Veröffentlichungstag der Anmeldung: 21.09.2005
(73) Patentinhaber: Continental Teves AG & Co. oHG, 60488 Frankfurt am Main (DE)
(72) Erfinder: GRIESSER, Martin, 65760 Eschborn (DE); KÖBE, Andreas, 64625 Bensheim (DE); EDLING, Frank, 65929 Frankfurt (DE); KOUKES, Vladimir, 64297 Darmstadt (DE)
(86) Internationale Anmeldenummer: PCT/EP2003/013987
(87) Internationale Veröffentlichungsnummer: WO 2004/054824

(56) Entgegenhaltungen:
- WO-A-03/031990
- DE-A- 19 723 037
- US-A- 4 355 297
- US-A- 6 060 984
- US-A1- 2003 062 994

## Beschreibung

Die vorliegende Erfindung bezieht sich auf ein Verfahren zur indirekten Druckverlusterkennung an einem Kraftfahrzeugrad, sowie ein Computerprogrammprodukt gemäß Anspruch 10.

Es sind, z. B. aus der Gattungsgemäßen DE 100 58 140 A1, Verfahren zur indirekten Reifendruckverlusterkennung (DDS) bekannt die auf einer Messung von Abrollradien der Räder eines Fahrzeugs basieren. Aus diesen Messgrößen werden Verhältnisse gebildet. Diese werden gelernt und dienen anschließend als Referenzwerte. Abweichungen davon werden als Reifendruckverlust interpretiert.

In der DE 100 44 114 A1 ist ein weiteres Verfahren und eine Vorrichtung zur Erkennung eines Druckverlustes von Reifen in Kraftfahrzeugen mit Plausibilitätsprüfung beschrieben. Die in dieser Schrift bestimmten Referenzwerte zur Erkennung eines Druckverlustes werden durch die Plausibilitätsprüfung überprüft um Fehlwarnungen zu vermeiden bzw. zu minimieren.

In der WO 2000006433 A1 ist ein Verfahren zur Schlechtwegerkennung beschrieben, welches zur Fahrzeuggeschwindigkeitsregelung eingesetzt wird.

Ein Nachteil dieser bekannten indirekten Druckverlusterkennungsverfahren ist, dass diese Verfahren immer auf Abweichungen der einzelnen Räder untereinander aufbauen, wodurch ein Druckverlust an mehr als an einem Reifen nicht immer erkennbar ist. Speziell die Erkennung von Druckverlusten an mehreren bzw. allen Reifen ist damit nicht immer möglich.

Weiterhin sind Verfahren bekannt, welche mit Hilfe einer Frequenzanalyse eine Reifendruckverlusterkennung durchführen.

Hierbei wird eine Verschiebung von Maxima im Frequenzspektrum als Reifendruckverlust interpretiert. Dieser Lösungsansatz ist sehr rechenintensiv und benötigt hohe Ressourcen an Arbeitsspeicher (RAM).

Daher ist es Aufgabe der Erfindung, ein Verfahren bereitzustellen, welches eine kostengünstige und sichere Erkennung von Druckverlusten auch an mehreren bzw. allen Rädern ermöglicht.

Diese Aufgabe wird erfindungsgemäß durch das Verfahren gemäß Anspruch 1 gelöst.

Bevorzugt wird die Radbeschleunigung innerhalb einer vorbestimmten Zeit für alle vier Räder beobachtet und Abweichungen in der Radbeschleunigung ausgewertet. Die Auswertung der Radbeschleunigung erfolgt hierbei bevorzugt nur, wenn bestimmte Fahrmanöver bzw. Fahrzustände vorliegen. Als ein besonders bevorzugter Fahrzustand wird eine Geradeausfahrt angesehen. Die Erkennung einer Geradeausfahrt erfolgt bevorzugt durch die Auswertung von Fahrparametern wie beispielsweise Querbeschleunigung des Fahrzeugs, Längsbeschleunigung des Fahrzeugs, Gierrate, Radmomente, etc. Diese Fahrparameter können mittels Sensoren gemessen oder aus anderen Größen berechnet werden. Teilweise können diese Fahrparameter von einem Fahrzeugdatenbus (CAN) abgefragt werden, wo sie auch anderen Systemen wie beispielsweise einem Antiblockiersystem (ABS) oder einer Traktionskontrolle (TCS) oder einem elektronischen Stabilitätsprogramm (ESP) zur Verfügung stehen.

Weiterhin ist bevorzugt, dass die Auswertung der Radbeschleunigung erst ab einer Fahrzeugmindestgeschwindigkeit erfolgt. Vorzugsweise erfolgt die Auswertung der Radbeschleunigung nur, wenn die Fahrparameter unterhalb gewisser Grenzwerte liegen, welche eine Geradeausfahrt beschreiben.

Aus dem Minimum und dem Maximum der Radbeschleunigung wird bevorzugt für jedes Fahrzeugrad eine Differenz gebildet. Weiterhin ist bevorzugt, dass anstatt der Differenz der Betrag oder nur die positiven bzw. negativen Beschleunigungswerte von Maximum und Minimum gebildet und ausgewertet werden.

Vorzugsweise wird aus der Differenz jedes einzelnen Fahrzeugrades ein Referenzwert gebildet, welcher ganz besonders bevorzugt einen arithmetischen Mittelwert der Differenz über eine Zeit T1 oder einen gefilterten Wert der Differenz darstellt. Dieser gefilterte Wert wird bevorzugt aus einer Filterung erster Ordnung gewonnen.

Der Grenzwert THRESH 1 wird bevorzugt abhängig vom am Fahrzeugrad anliegenden Radmoment festgelegt. Besonders bevorzugt werden unterschiedliche Grenzwerte THRESH 1 für eine angetriebene Achse und eine freirollende Achse festgelegt.

Eine Warnung an den Fahrzeugführer wird vorzugsweise unterdrückt, wenn ein Fahrzeugrad den Grenzwert THRESH 1 überschritten hat und mindestens ein weiteres Fahrzeugrad einen zweiten Grenzwert THRESH 2 überschritten hat.

Bevorzugt wird das erfindungsgemäße Verfahren zusammen mit einem bekannten indirekt messenden Reifendrucküberwachungssystem (DDS) und/oder einem bekannten direkt messenden Reifendrucküberwachungssystem (TPMS) eingesetzt, wobei dieses nur zur ergänzenden Betrachtung oder Verbesserung bekannten indirekt messenden Reifendrucküberwachungssystem (DDS) und/oder einem bekannten direkt messenden Reifendrucküberwachungssystem (TPMS) herangezogen wird.

Weitere Merkmale und Vorteile des erfindungsgemäßen Verfahrens gehen aus den Unteransprüchen hervor. Die Erfindung wird anhand der dreier Figuren beschrieben. In den Figuren zeigen:
- Fig. 1: die Radbeschleunigung über der Zeit,
- Fig. 2: das Radmoment über der Fahrzeuggeschwindigkeit und
- Fig. 3: die Differnz Sample_acc über der Zeit.

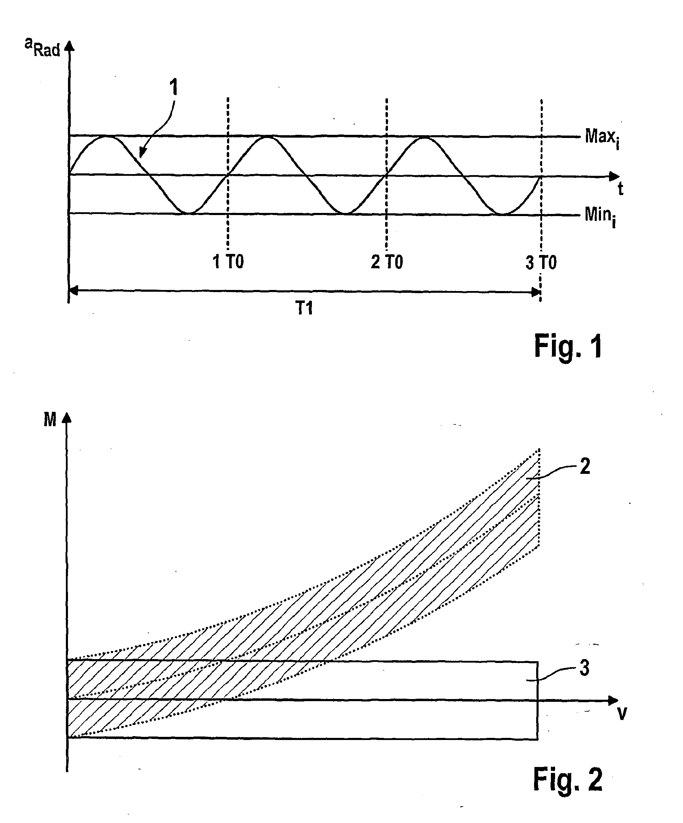

In Fig. 1 stellt Kurve 1 einen möglichen Verlauf der Radbeschleunigung a_{Rad} eines Fahrzeugrades über der Zeit t dar. Die Radbeschleunigung a_{Rad} wird jeweils über Zeitintervalle T0 beobachtet und eine Differenz Sample_acc gebildet, welche aus dem Maximum Maxᵢ und dem Minimum Minᵢ eines jeden Rades i innerhalb dieses Zeitintervalls T0 besteht. Über eine Zeit T1, welche mehrere Zeitintervalle T0 umfasst, wird ein Referenzwert Ref_DIFF für die Radbeschleunigung a_{rad} jedes einzelnen Rades i ermittelt und abgelegt.

In Fig. 2 ist das Radmoment M eines Fahrzeugrades gegen die Fahrzeuggeschwindigkeit v aufgetragen. Da die Fahrzeuggeschwindigkeit v nicht nur von dem Radmoment M, sondern auch von anderen Parametern wie beispielsweise dem Reibwert zwischen Fahrbahn und Reifen abhängig ist, werden sogenannte Radmomentenbereiche, wie durch Kurve 2 und 3 dargestellt, gebildet. Die Radmomentenbereiche beschreiben hierbei zu jeder Fahrzeuggeschwindigkeit v einen gültigen Bereich in dem ein Radmoment M eines intakten Fahrzeugrades liegen kann. Liegt ein Radmoment M bei einer Fahrzeuggeschwindigkeit v außerhalb des gültigen Bereichs, so deutet dies darauf hin, dass beispielsweise ein Reifendefekt vorliegt. Kurve 2 beschreibt hierbei den gültigen Radmomentenbereich eines angetriebenen Fahrzeugrades über der Fahrzeuggeschwindigkeit v, wohingegen Kurve 3 einen typischen Verlauf des Radmomentenbereichs eines freirollenden bzw. nichtangetriebenen Fahrzeugrades einer angetriebenen Achse über der Fahrzeuggeschwindigkeit v darstellt. Dieses Verfahren lässt sich sowohl für ein Fahrzeug mit einer angetriebenen Achse, als auch für ein Fahrzeug mit zwei angetriebenen Achsen einsetzen. Bei sperrbaren Differentialen wird die Radmomentenverteilung in Abhängigkeit vom Sperrgrad berechnet. Dieser liegt entweder auf dem Fahrzeugdatenbus (CAN) vor, oder kann aus den Raddrehzahldifferenzen z. B. bei Kurvenfahrt durch Vergleich Gierrate/ Querbeschleunigung mit den gemessenen Werten beziehungsweise in Längsrichtung durch Vergleich des Schlupfs an den Vorderrädern im Vergleich mit den Hinterrädern als Funktion des Radmomentes ermittelt werden.

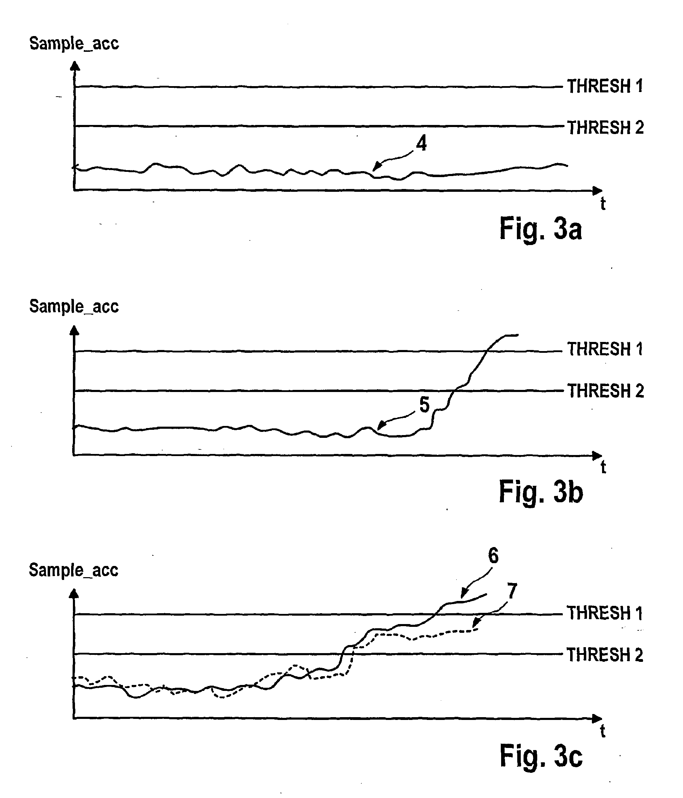

Die Differenz Sample_acc der Radbeschleunigung a_{Rad} ist in Fig. 3 gegen die Zeit t aufgetragen. Fig. 3a stellt durch Kurve 4 einen möglichen Verlauf einer Differenz Sample_accl eines Rades über der Zeit t ohne Überschreitung eines Grenzwertes THRESH 1 oder THRESH 2 dar. In Fig. 3b übersteigt die durch Kurve 5 dargestellte Differenz Sample_acc2 eines Rades die Grenzwerte THRESH 1 und THRESH 2. In Fig. 3c übersteigt ebenfalls eine durch Kurve 6 dargestellte Differenz Sample_acc3 eines Rades die Grenzwerte THRESH 1 und THRESH 2, wohingegen eine Differenz Sample acc4 eines anderen Rades, dargestellt durch Kurve 7, nur den Grenzwert THRESH2 übersteigt.

Im folgenden wird ein Beispiel für das erfindungsgemäße Verfahren anhand einzelner Schritte unter Bezugnahme auf die Figuren 1 bis 3 beschrieben.
1) Es wird eine Auswahl von Fahrmanöver definiert, welche eine Auswertung zulassen (z. B. alle DDS-relevanten Fahrmanöver wie beispielsweise eine Geradeausfahrt) . Die Erkennung einer Geradeausfahrt erfolgt durch Auswertung von Fahrparameter wie beispielsweise Querbeschleunigung, Längsbeschleunigung, Gierrate, Radmomente, etc. Diese Fahrparameter können sensorisch erfasst, aus anderen Größen berechnet oder von einem Fahrzeugdatenbus (CAN) abgefragt werden, wo diese Fahrparameter bereits von anderen System wie einem Antiblockiersystem (ABS), einer Traktionskontrolle (TCS) oder einem elektronischen Stabilitätsprogramm (ESP) bereitgestellt oder ebenfalls genutzt werden. Die Auswertung der Radbeschleunigung a_{Rad} erfolgt erst ab einer Fahrzeugmindestgeschwindigkeit von etwa 15 km/h.
2) über ein Zeitintervall T0 wird das Maximum MAXᵢ und das Minimum MINᵢ der Radbeschleunigung a_{Rad} (Siehe Fig. 1) eines Rades i ermittelt. Dies erfolgt für alle n Räder des Fahrzeugs
3) Es wird die Differenz, oder der Betrag oder nur die positiven bzw. negativen Beschleunigungswerte von Maximum und Minimum gebildet und ausgewertet:
4) Sample_acc = MAXᵢ-MINᵢ
5) Es wird diese Differenz Sample_acc über eine Zeit T1, welche sich über mehrere Zeitintervalle T0 erstreckt, beobachtet und ein Referenzwert Ref_DIFF hierfür abgelegt. Das kann der arithmetische Mittelwert oder ein gefilterter Wert, z. B. durch einen Filter erster Ordnung, sein.
6) Es wird die Differenz Sample_acc (siehe Fig. 3) weiter beobachtet und bei Überschreiten eines radmomentenabhängigen Grenzwertes THRESH1 wird erst nach statistischen Absicherung, dies kann z. B. eine hinreichend kleine Standardabweichung sein, eine Warnung ausgegeben.
7) Es finden Plausibilisierungen statt, so dass Warnungen unterdrückt werden, falls andere Mechanismen beispielsweise einen Schlechtweg erkannt haben oder alle 4 Räder einen Grenzwert THRESH2 (siehe Fig. 3), welcher kleiner als der radmomentenabhängige Grenzwert THRESH 1 ist, überschreiten.
8) Zudem können in einer weiteren Ausprägung der Erfindung die Grenzwerte THRESH 2 für jedes Rad individuell oder paarweise, jeweils die angetriebenen bzw. die nichtangetriebenen Räder, gesetzt werden. Weiterhin werden getrennte Auswahlkriterien für THRESH1 gesetzt in Abhängigkeit davon, ob gerade ein Moment an diesem Rad anliegt oder nicht.

Es werden alle oder Teile von Unterdrückungsmechanismen verwendet, welche bereits aus anderen Systemen vorliegen (z. B. eines indirekten Reifendruckverlusterkennungssystems, ABS, TCS, ESP, usw.)

## Patentansprüche

1. Verfahren zur indirekten Druckverlusterkennung an einem Kraftfahrzeugrad, **dadurch gekennzeichnet, dass** die zum Ermitteln des Druckverlustes verwendete/n Kenngröße/n im wesentlichen aus der Raddrehbeschleunigung a_{Rad} bedeutend die zeitliche Änderung der Winkel-geschwindigkeit des Rades, abgeleitet wird/werden.

2. Verfahren nach Anspruch 1, **dadurch gekennzeichnet, dass** eine Auswertung der Raddrehbeschleunigung a_{Rad} nur bei bestimmten Fahrmanövern bzw. Fahrzuständen, insbesondere bei einer Geradeausfahrt, durchgeführt wird.

3. Verfahren nach Anspruch 2, **dadurch gekennzeichnet, dass** über ein vorbestimmtes Zeitintervall T0 das Minimum Minᵢ und das Maximum Maxᵢ der Raddrehbeschleunigung a_{Rad} jedes einzelnen Fahrzeugrades ermittelt wird.

4. Verfahren nach Anspruch 3, **dadurch gekennzeichnet, dass** aus dem Minimum Minᵢ und dem Maximum Maxᵢ der Raddrehbeschleunigung a_{Rad} eine Differenz Sample_acc gebildet wird.

5. Verfahren nach Anspruch 4, **dadurch gekennzeichnet, dass** ein Referenzwert Ref_DIFF über eine Zeit T1, welche sich über mehrere Zeitintervalle T0 erstreckt, aus den Differenzen Sample_acc der einzelnen Zeitintervalle T0 gebildet wird.

6. Verfahren nach Anspruch 5, **dadurch gekennzeichnet, dass** bei Überschreitung eines ersten Grenzwertes THRESH 1 durch die Differenz Sample_acc eine Warnung ausgegeben wird.

7. Verfahren nach Anspruch 6, **dadurch gekennzeichnet, dass** die Warnung unterdrückt wird, wenn mindestens eine weitere Differenz Sample_acc eines weiteren Fahrzeugrades einen zweiten Grenzwert THRESH 2 überschritten hat.

8. Verfahren nach Anspruch 6, **dadurch gekennzeichnet, dass** die Warnung unterdrückt wird, wenn andere im Fahrzeug vorhandene Mechanismen bzw. Verfahren eine Situation, z. B. Schlechtweg, uneinheitlicher Fahrbahnreibwert ("µ-Split"), Fahrt auf Schnee und Eis, erkannt haben, welche die Auswertung der Raddrehbeschleunigung beeinflusst.

9. Verfahren nach Anspruch 1, **dadurch gekennzeichnet, dass** die Auswertung der Raddrehbeschleunigung a_{Rad} unterdrückt wird, wenn andere die Raddrehbeschleunigung a_{Rad} beeinflussende Systeme, wie z. B. Antiblockiersystem, Traktionskontrollsystem, elektronisches Stabilitätssystem, etc., aktiv sind.

10. Computerprogrammprodukt zur Durchführung allen Schritte eines Verfahrens gemäß mindestens einem der Ansprüche 1 bis 9.

## Claims

1. A method for the indirect pressure loss detection on a motor vehicle wheel,
**characterized in that** the parameter(s) used for determining pressure loss is/are essentially derived from the wheel acceleration a_{wheel} implying the time variation of the angular velocity of the wheel.

2. The method as claimed in claim 1,
**characterized in that** wheel acceleration a_{wheel} is evaluated only if defined driving maneuvers or driving conditions prevail, in particular during straight travel.

3. The method as claimed in claim 2,
**characterized in that** the minimum Mini and the maximum Maxᵢ of the wheel acceleration a_{wheel} of each individual vehicle wheel is determined in a predetermined time interval T0.

4. The method as claimed in claim 3,
**characterized in that** a difference Sample_acc is produced from the minimum Minᵢ and the maximum Maxᵢ of the wheel acceleration a_{wheel}.

5. The method as claimed in claim 4,
**characterized in that** a reference value Ref_DIFF is produced from the differences Sample_acc of the individual time intervals T0 over a time T1 stretching over several time intervals T0.

6. The method as claimed in claim 5,
**characterized in that** an alarm is triggered when the difference Sample_acc exceeds a first limit value THRESH 1.

7. The method as claimed in claim 6,
**characterized in that** the alarm is suppressed when at least one further difference Sample_acc of another vehicle wheel has exceeded a second limit value THRESH 2.

8. The method as claimed in claim 6,
**characterized in that** the alarm is suppressed when other mechanisms or methods provided in the vehicle have detected a situation, e.g. rough road sections, a non-uniform roadway coefficient of friction ('µ-split'), driving on snow and ice, influencing the evaluation of the wheel acceleration.

9. The method as claimed in claim 1,
**characterized in that** the evaluation of the wheel acceleration a_{wheel} is suppressed when other systems influencing the wheel acceleration a_{wheelt}, such as an antilock system, traction control system, electronic stability system, etc., are active.

10. A computer program product for implementing all steps of a method as claimed in at least one of claims 1 to 9.

## Revendications

1. Procédé de détection indirecte d'une perte de pression sur une roue de véhicule automobile, **caractérisé en ce que** la/les grandeur/s caractéristique/s utilisée/s pour déterminer la perte de pression est/sont dérivée/s essentiellement de l'accélération de rotation de roue a_{Rad}, signifiant la variation dans le temps de la vitesse angulaire de la roue.

2. Procédé selon la revendication 1, **caractérisé en ce qu'**il est procédé à une évaluation de l'accélération de rotation de roue a_{Rad} uniquement en cas de manoeuvres ou d'états de conduite déterminés, en particulier en ligne droite.

3. Procédé selon la revendication 2, **caractérisé en ce que** le minimum Mini et le maximum Maxᵢ de l'accélération de rotation de roue a_{Rad} de chaque roue de véhicule individuelle sont déterminés pendant un intervalle de temps T0 prédéterminé.

4. Procédé selon la revendication 3, **caractérisé en ce qu'**une différence Sample_acc est formée à partir du minimum Mini et du maximum Maxᵢ de l'accélération de rotation de roue a_{Rad}.

5. Procédé selon la revendication 4, **caractérisé en ce qu'**une valeur de référence Ref_DIFF est formée sur un temps T1, qui s'étend sur plusieurs intervalles de temps T0, à partir des différences Sample_acc des intervalles de temps T0 individuels.

6. Procédé selon la revendication 5, **caractérisé en ce qu'**en cas de dépassement d'une première valeur limite THRESH 1 par la différence Sample_acc, un avertissement est délivré.

7. Procédé selon la revendication 6, **caractérisé en ce que** l'avertissement est supprimé si au moins une autre différence Sample_acc d'une autre roue de véhicule a dépassé une deuxième valeur limite THRESH 2.

8. Procédé selon la revendication 6, **caractérisé en ce que** l'avertissement est supprimé si d'autres mécanismes ou procédés, prévus dans le véhicule, ont détecté une situation, par exemple mauvaise route, coefficient de friction non uniforme de la chaussée ("µ-Split"), conduite sur neige et verglas, qui influence l'évaluation de l'accélération de rotation de roue.

9. Procédé selon la revendication 1, **caractérisé en ce que** l'évaluation de l'accélération de rotation de roue a_{Rad} est supprimée si d'autres systèmes influençant l'accélération de rotation de roue a_{Rad}, tels que par exemple un système d'antiblocage, un système de contrôle de traction, un système électronique de stabilité, etc., sont actifs.

10. Produit de programme d'ordinateur pour la mise en oeuvre de toutes les étapes d'un procédé selon l'une au moins des revendications 1 à 9.
